(19) Europäisches Patentamt
European Patent Office
Office européen des brevets

(11) Publication number: **0 316 542 B1**

# (12) EUROPEAN PATENT SPECIFICATION

(45) Date of publication of patent specification: **20.05.92** (51) Int. Cl.5: **F16G 15/04**

(21) Application number: **88115464.5**

(22) Date of filing: **21.09.88**

## (54) Fusible link construction.

(30) Priority: **13.11.87 US 119956**

(43) Date of publication of application:
**24.05.89 Bulletin 89/21**

(45) Publication of the grant of the patent:
**20.05.92 Bulletin 92/21**

(84) Designated Contracting States:
**BE DE FR SE**

(56) References cited:
**US-A- 1 445 702**
**US-A- 3 336 984**
**US-A- 3 779 004**
**US-A- 4 346 554**

(73) Proprietor: **VAN WORMER MANAGEMENT CORPORATION**
**1109 W. CEDAR, P.O. Box 1010**
**Standish, Michigan 48658(US)**

(72) Inventor: **Gueli, Carmen**
**3655 Schuman Road**
**Saginaw Michigan 48601(US)**

(74) Representative: **Tetzner, Volkmar, Dr.-Ing. Dr. jur.**
**Van-Gogh-Strasse 3**
**W-8000 München 71(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.08/2.19/2.0)

## Description

The invention relates to a fusible link construction including a first body having in one side thereof a recess terminating at one end in a ledge, a second body having an arm accommodated in said recess for movements toward and away from said ledge, and a thermally sensitive, collapsible strut reacting between said bodies, having its opposite ends seated on the respective bodies and normally maintaining said arm spaced from said ledge, and means carried by said bodies for coupling them to force applying means operable to effect relative movement of said bodies in response to collapse of said strut.

A fusible link construction of the above cited kind is known from US-A-1 445 702. With this known construction a bar is provided having intermediate between its ends projections which serve as fulcrums for levers. These levers at their outer ends are connected to the corresponding ends of the bar by fusible link constructions of the above defined kind. This known construction, therefore, comprises two thermally sensitive, collapsible struts which are provided on opposite sides of the central line of force acting between an abutment member and a nozzle member.

It is the object of the present invention to provide a fusible link construction of the above defined kind such that it comprises only a few components that are simple to manufacture and easy to assemble, the parts being assembled in such manner as to avoid the necessitiy of having to rely upon any moment arm, thereby providing a direct relationship between the load rating of and the load applied to the link.

According to the invention this object is solved in that the strut occupies a position directly in line with the force exerted on the first and second body tending to separate them, said force applying means being operable in such direction as to cause said arm to move toward engagement with said ledge, said arm and ledge being so configured that engagement herebetween effects ejection of said arm from said recess and separation of said bodies.

A preferred embodiment of the invention is disclosed in the following description and in the accompanying drawing wherein:

Figure 1 is an elevational view illustrating the parts of the fusible link in assembled relation;

Figure 2 is a sectional view taken on the line 2-2 of Figure 1;

Figure 3 is a front elevational view of the first body only;

Figure 4 is a side elevational view of the first body;

Figure 5 is a front elevational view of the second body; and

Figure 6 is a side elevational view of the second body.

A fusible link formed in accordance with the preferred embodiment of the invention is designated generally by the reference character 1 and comprises a tubular first body 2, a flat second body 3, a thermally sensitive strut 4, and a retaining screw 5.

The first body 2 has a generally cylindrical housing having a wall 6 through which extends a bore 7 terminating at one end in a shoulder 8. In communication with the bore 7 is an axial port 9, a radial opening 10, and a recess 11 defined by parallel, longitudinal sides 12 and 13, a radial top edge 14, and an inclined lower ledge 15. That end of the bore 7 remote from the shoulder 8 is threaded. The port 9 and the opening 10, as well as the recess 11, ensure communication of the bore 7 with ambient temperature.

The second body 3 comprises a flat member having parallel, spaced apart legs 16 and 17 connected at corresponding ends by an arm 18 and at their opposite ends by converging limbs 19 and 20 joined to one another by an arcuate connector 21. The legs, the arm, and the limbs of the second body 3 define an open space 22 the transverse dimension of which is greater than the diameter of the tubular first body 2. The legs 16 and 17 are provided with inwardly directed guide keys 23 which extend inwardly of the space 22, but terminate short of one another. The keys 23 may be slideably accommodated in keyways 24 formed in opposite sides of the first body 2. The arm 18 has an outwardly projecting spike 25 on its outer surface and a dimple 26 in its inner surface.

The strut 4 is conventional and comprises a sealed body 27 formed of a glass material known as quartzoid, or other suitable material, and containing a eutectic liquid such as a mixture of water and glycerin which expands rapidly in response to an increase in its temperature to a predetermined level. The body 27 has at one end thereof a tapered end 28 that terminates in a tip 29. The opposite end of the body 27 terminates in a convex end 30.

The retaining screw 5 has a threaded stem 31 adapted for accommodation in the threaded end of the bore 7, such stem 31 terminating at one end in a dimple 32 that is nestable with the spike 25. At its opposite end the stem 31 terminates in an anchor member 33 having an opening 34 therein.

The parts of the link 1 may be assembled by fitting the body 27 of the strut 4 into the bore 7 of the first body 2 in such manner that the strut is interposed between the arm 18 and the shoulder 8. Thereafter, the second body 3 may be assembled with the first body 2 by introducing the keys 23 into the keyways 24 and rocking the second body 3 in such direction as to enable the arm 18 to enter the bore 7 via the recess 11. The width of the keyways 24 and the distance between the top edge 14 of the recess 11 and the end 30 of the body 27 are sufficient to permit such rocking movement of the second body 3.

When the arm 18 of the second body 3 occupies the bore 7, the end 30 of the body 27 may be fitted into the dimple 26 of the arm 18, following which the retaining screw 5 may be turned in such direction as to cause its dimple 32 to receive the spike 25 of the arm. Further rotation of the retaining screw 5 will cause the end 28 of the strut 4 to seat firmly against the shoulder 8 and the end 30 to seat firmly in the dimple 26. The strut 4 then will resist further rotation of the retaining screw 5. The force applied to the strut 4 by the retaining screw 5 may be that resulting from turning the screw until it is finger tight or, if a precise force is desired, by applying a torque wrench to the screw 5.

The assembled link then may be coupled at its opposite ends to connectors 35 and 36 by means of which a continuous force in tension can be applied on the bodies 2 and 3 which normally is resisted by the strut 4. Should the ambient temperature to which the strut 4 is subjected reach a selected predetermined level between 71° C (160° F) and 260° C (500° F), for example, the liquid contained within the body 27 will expand suddenly resulting in disintegration and collapse of the strut, thereby removing the resistance to relative movement of the bodies 2 and 3 due to the force applied thereon via the connectors 35 and 36. Thus, the first body 2 may move upwardly, as viewed in Figure 2, and the second body 3 may move downwardly, as viewed in Figure 2. When the bodies 2 and 3 have moved a distance sufficient that the arm 18 engages the ledge 15, the arm will be cammed outwardly of the bore 7 through the recess 11, thereby resulting in complete separation of the bodies 2 and 3.

Of particular significance is the fact that the strut 4 occupies a position directly in line with the force exerted on the bodies 2 and 3 tending to separate them. As a consequence, no moment arms are involved in calculating the force to which the strut 4 may be subjected, nor does separation of the assembled parts of the link depend upon anything other than collapse of the strut 4. Consequently, the rating of the fusible link can be determined with great precision.

Since the link construction does not rely upon moment arms, springs, or the like, it can be of compact size, thereby enabling it to be utilized in smaller areas than otherwise would be the case.

## Claims

**1.** A fusible link construction including
- a first body (2) having in one side thereof a recess (11) terminating at one end in a ledge (15),
- a second body (3) having an arm (18) accommodated in said recess for movements toward and away from said ledge,
- and a thermally sensitive, collapsible strut (4) reacting between said bodies, having its opposite ends (28, 30) seated on the respective bodies and normally maintaining said arm spaced from said ledge,
- and means (connector 21, ancor member 33) carried by said bodies for coupling them to force applying means (connectors 35, 36) operable to effect relative movement of said bodies (2, 3) in response to collapse of said strut (4), characterized in that
- the strut (4) occupies a position directly in line with the force exerted on the first and second body (2, 3) tending to separate them,
- said force applying means (connectors 35, 36) being operable in such direction as to cause said arm (18) to move toward engagement with said ledge (15), said arm and ledge being so configured that engagement herebetween effects ejection of said arm (18) from said recess (11) and separation of said bodies (2, 3).

**2.** A fusible link construction according to claim 1 further characterized in that said ledge (15) has an inclined surface confronting said arm (18).

**3.** A fusible link construction according to claim 1 further characterized in that said strut (4) includes a eutectic material operable in response to a predetermined increase in its temperature to effect collapse of said strut.

**4.** A fusible link construction according to claim 1 further characterized in that guide means (key 23, keyway 24) react between said bodies (2, 3) for guiding the movements of said arm (18) in said recess (11).

**5.** A fusible link construction according to claim 4 further characterized in that said guide means comprises a key (23) and a keyway (24).

**6.** A fusible link construction according to claim 1 further characterized in that retainer means (screw 5) are carried by said first body (2) and bear against said arm (18) for clamping said arm (18) against said strut (4).

**7.** A fusible link construction according to claim 6 further characterized in that said retainer means (screw 5) is adjustable in directions toward and away from said ledge (15).

**8.** A fusible link construction according to claim 1 further characterized in that said first body (2) comprises a tubular housing having a circumferential wall (6) interrupted by said recess (11).

**9.** A fusible link construction according to claim 8 further characterized in that said housing has a bore (7) terminating at one end in a seat for said strut (4).

**10.** A fusible link construction according to claim 9 further characterized in that said bore (7) is threaded at its opposite end for the accommodation of an adjustable retainer means (screw 5) engageable with said arm (18).

**11.** A fusible link construction according to claim 10 further characterized in that said arm (18) and said retainer means (screw 5) have confronting surfaces with nestable parts (spike 25, dimple 32).

**12.** A fusible link construction according to claim 9 further characterized in that said wall (6) of said housing has at least one opening (10) therein other than said recess (11) in communication with said bore (7).

**13.** A fusible link construction according to claim 1 further characterized in that said second body (3) comprises a yoke of which said arm (18) is a part, said yoke defining an open space (22) of such size as to accommodate therein a portion of said first body (2).

**Revendications**

**1.** Une structure à maillon fusible comprenant:

- un premier corps (2) comportant, dans l'un de ses côtés, un évidement (11) se terminant à une extrémité dans un épaulement (15),
- un deuxième corps (3) comportant un bras (18) logé dans ledit évidement pour s'approcher et s'écarter dudit épaulement,
- et une barre comprimée thermiquement sensible (4), pouvant s'affaisser, réagissant entre lesdits corps, ses extrémités opposées (28, 30) reposant sur les corps respectifs et maintenant normalement ledit bras à distance dudit épaulement,
- et des moyens (connecteur 21, élément d'ancrage 33) portés par lesdits corps pour les accoupler à des moyens d'application de force (connecteurs 35, 36) pouvant fonctionner pour effectuer un déplacement relatif desdits corps (2, 3) en réponse à l'affaissement de ladite barre comprimée (4),

caractérisée en ce que

- la barre comprimée (4) occupe une position directement alignée avec la force exercée sur le premier et le deuxième corps (2, 3) qui tend à les séparer,
- lesdits moyens d'application de force (connecteurs 35, 36) pouvant fonctionner dans une direction apte à amener ledit bras (18) à venir s'engager avec ledit épaulement (15), ledit bras et ledit épaulement étant configurés de telle manière qu'un contact entre eux effectue une éjection dudit bras (18) hors de l'évidement (11) et une séparation desdits corps (2, 3).

**2.** Une structure à maillon fusible selon la revendication 1 caractérisée en outre en ce que ledit épaulement (15) comporte une surface inclinée tournée vers ledit bras (18).

**3.** Une structure à maillon fusible selon la revendication 1 caractérisée en outre en ce que ladite barre comprimée (4) comprend une matière eutectique qui peut agir en réponse à une augmentation prédéterminée de sa température pour provoquer l'affaissement de ladite barre comprimée.

**4.** Une structure à maillon fusible selon la revendication 1 caractérisée en outre en ce que des moyens de guidage (clavette 23, rainure de clavette 24) réagissent entre lesdits corps (2, 3) pour guider les déplacements dudit bras (18) dans ledit évidement (11).

**5.** Une structure à maillon fusible selon la revendication 4 caractérisée en outre en ce que lesdits moyens de guidage comprennent une clavette (23) et une rainure de clavette (24).

**6.** Une structure à maillon fusible selon la revendication 1 caractérisée en outre en ce que des moyens de retenue (vis 5) sont portés par ledit premier corps (2) et s'appuient contre ledit bras (18) pour serrer ledit bras (18) contre ladite barre comprimée (4).

7. Une structure à maillon fusible selon la revendication 6 caractérisée en outre en ce que ledit moyen de retenue (vis 5) est réglable dans des directions provoquant un rapprochement ou un écartement vis-à-vis dudit épaulement (15).

8. Une structure à maillon fusible selon la revendication 1 caractérisée en outre en ce que ledit premier corps (2) comprend un logement tubulaire comportant une paroi circonférentielle (6) interrompue par ledit évidement (11).

9. Une structure à maillon fusible selon la revendication 8 caractérisée en outre en ce que ledit boîtier comporte un alésage (7) se terminant à une extrémité dans un siège destiné à ladite barre comprimée (4).

10. Une structure à maillon fusible selon la revendication 9 caractérisée en outre en ce que ledit alésage (7) est fileté à son extrémité opposée pour loger un moyen de retenue (vis 5) s'engageant avec ledit bras (18).

11. Une structure à maillon fusible selon la revendication 10 caractérisée en outre en ce que ledit bras (18) et ledit moyen de retenue (vis 5) comportent des surfaces tournées l'une vers l'autre comportant des éléments emboîtables (pointe 25, trou de centrage 32).

12. Une structure à maillon fusible selon la revendication 9 caractérisée en outre en ce que ladite paroi (6) dudit logement comporte au moins une ouverture (10), autre que ledit évidement (11), en communication avec ledit alésage (7).

13. Une structure à maillon fusible selon la revendication 1 caractérisée en outre en ce que ledit deuxième corps (3) comprend un étrier dont ledit bras (18) est un élément, ledit étrier définissant un espace ouvert (22) d'une dimension propre à y loger une partie dudit premier corps (2).

**Patentansprüche**

1. Kettenglied mit Schmelzelement, enthaltend
   - einen ersten gehäuseartigen Körper (2) mit einer Aussparung (11) an einer Seite, die an einem Ende in einem Vorsprung (15) endet,
   - einen zweiten gehäuseartigen Körper (3) mit einem Arm (18), der gegenüber dem Vorsprung hin- und herbeweglich in der Aussparung untergebracht ist,
   - eine wärmeempfindliche, kollabierende, zwischen den Körpern wirkende Strebe (4), deren entgegengesetzten Enden (28, 30) auf dem entsprechenden Körper aufsitzen und die im Normalbetrieb den Arm mit Abstand zum Vorsprung hält,
   - und von den Körpern getragene Einrichtungen (Verbindungselement 21, Ankerteil 33) zur Verbindung der Körper mit kraftanwendenden Einrichtungen (Verbindungselemente 35, 36), die eine Relativbewegung der Körper (2, 3) beim Kollabieren der Strebe (4) bewirken, dadurch gekennzeichnet, daß
   - die Strebe (4) eine Lage einnimmt, die sich unmittelbar in Verlängerung der Kraft befindet, die auf den ersten und den zweiten Körper (2, 3) ausgeübt wird und diese Körper zu trenen versucht,
   - und die kraftanwendenden Einrichtungen (Verbindungselemente 35, 36) in einer solchen Richtung betätigbar sind, daß der Arm (18) in Richtung eines Eingriffes mit dem Vorsprung (15) bewegt wird, wobei der Arm und der Vorsprung so gestaltet sind, daß ihr Ineinandergreifen das Auswerfen des Armes (18) aus der Aussparung (11) und die Trennung der Körper (2, 3) bewirkt.

2. Kettenglied mit Schmelzelement nach Anspuch 1, weiterhin dadurch gekennzeichnet, daß der Vorsprung (15) eine geneigte Oberfläche aufweist, die dem Arm (18) gegenüberliegt.

3. Kettenglied mit Schmelzelement nach Anspruch 1, weiterhin dadurch gekennzeichnet, daß die Strebe (4) ein eutektisches Material enthält, das bei einem vorbestimmten Ansteigen seiner Temperatur die Strebe kollabieren läßt.

4. Kettenglied mit Schmelzelement nach Anspruch 1, weiterhin dadurch gekennzeichnet, daß eine Führungseinrichtung (Riegel 23, Riegelbahn 24) zwischen den Körpern (2, 3) in Wirkungszusammenhang steht, um die Bewegungen des Armes (18) in der Aussparung (11) zu führen.

5. Kettenglied mit Schmelzelement nach Anspruch 4, weiterhin dadurch gekennzeichnet, daß die Führungseinrichtung einen Riegel (23) und eine Riegelbahn (24) enthält.

**6.** Kettenglied mit Schmelzelement nach Anspruch 1, weiterhin dadurch gekennzeichnet, daß ein Mitnehmer (Schraube 5) vom ersten Körper (2) getragen wird und gegen den Arm (18) zur Verklammerung des Armes (18) gegen die Strebe (4) drückt.

**7.** Kettenglied mit Schmelzelement nach Anspruch 6, weiterhin dadurch gekennzeichnet, daß der Mitnehmer (Schraube 5) in Richtung auf den Vorsprung (15) und von ihm weg einstellbar ist.

**8.** Kettenglied mit Schmelzelement nach Anspruch 1, weiterhin dadurch gekennzeichnet, daß der erste Körper (2) als röhrenförmiger Körper mit einer Umfangswand (6) gebildet wird, die durch die Aussparung (11) unterbrochen wird.

**9.** Kettenglied mit Schmelzelement nach Anspruch 8, weiterhin dadurch gekennzeichnet, daß der Körper eine Bohrung (7) aufweist, die an einem Ende in einem Sitz für die Strebe (4) endet.

**10.** Kettenglied mit Schmelzelement nach Anspruch 9, weiterhin dadurch gekennzeichnet, daß die Bohrung (7) an ihren beiden Enden mit einem Gewinde zur Aufnahme eines einstellbaren Mitnehmers (Schraube 5) versehen ist, der mit dem Arm (18) in Eingriff kommt.

**11.** Kettenglied mit Schmelzelement nach Anspruch 10, weiterhin dadurch gekennzeichnet, daß der Arm (18) und der Mitnehmer (Schraube 5) miteinander korrespondierenden Oberflächen mit ineinandergreifenden Teilen (Dorn 25, Vertiefung 32) enthalten.

**12.** Kettenglied mit Schmelzelement nach Anspruch 9, weiterhin dadurch gekennzeichnet, daß die Wand (6) des Körpers, abgesehen von der Aussparung (11), wenigstens eine Öffnung (10) enthält, die mit der Bohrung (7) in Verbindung steht.

**13.** Kettenglied mit Schmelzelement nach Anspruch 1, weiterhin dadurch gekennzeichnet, daß der zweite Körper (3) ein den Arm (18) als Teil enthaltendes Joch enthält, das einen offenen Raum (22) von solcher Größe bildet, daß er einen Teil des ersten Körpers (2) aufnimmt.

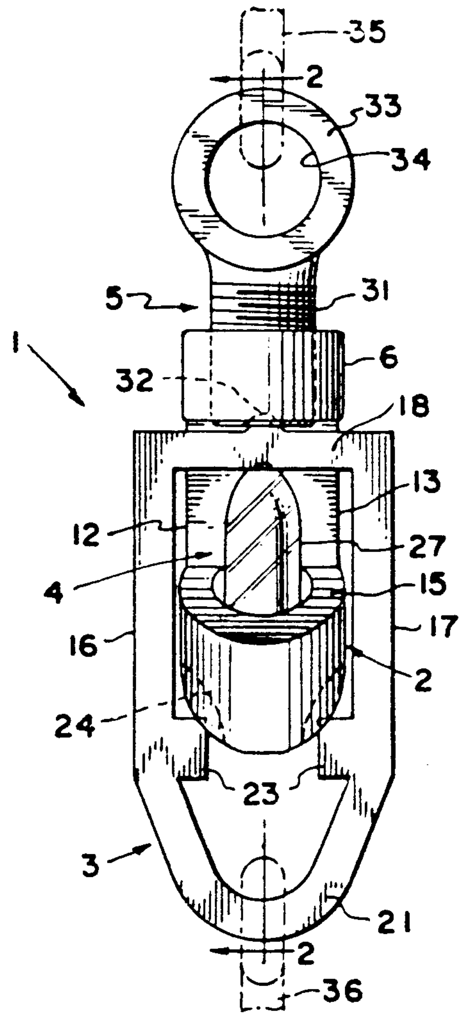

FIG.1

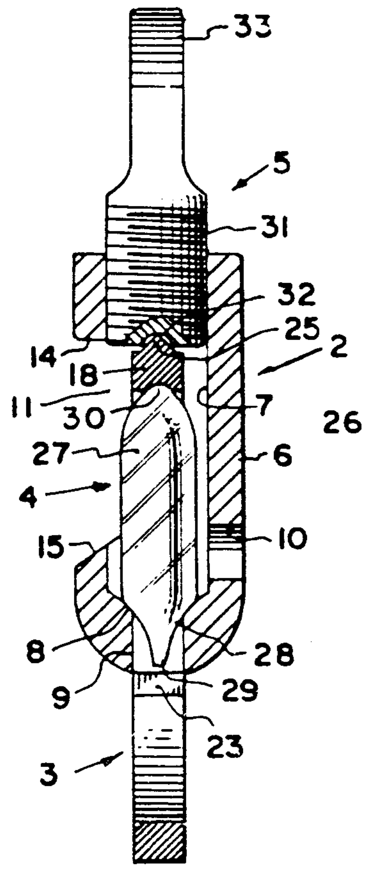

FIG.2

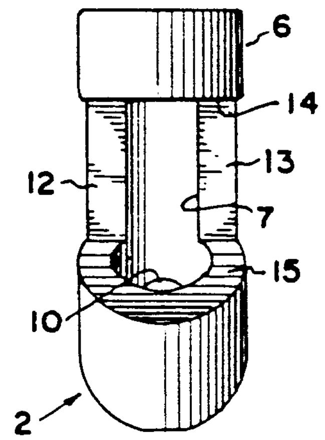

FIG.3

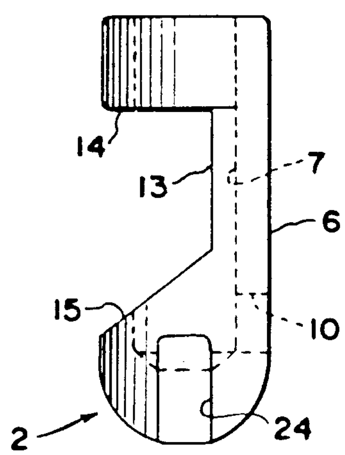

FIG.4

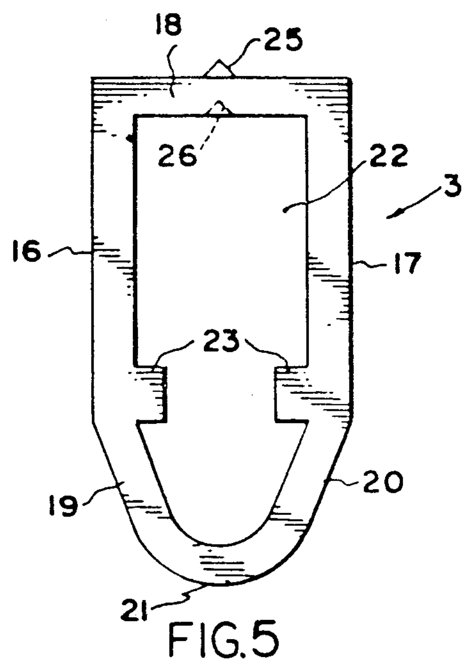

FIG.5

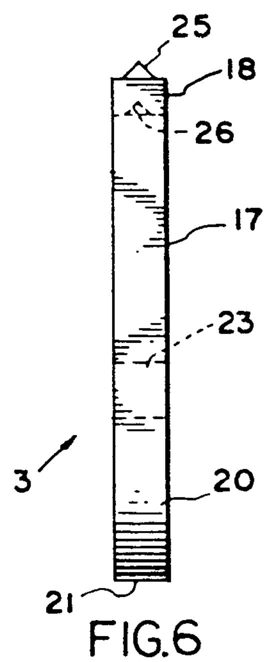

FIG.6